# EUROPÄISCHE PATENTSCHRIFT

(11) **EP 0 505 762 B1**
(45) Veröffentlichungstag und Bekanntmachung des Hinweises auf die Patenterteilung: **09.08.1995**
(21) Anmeldenummer: 92103425.2
(22) Anmeldetag: 28.02.1992
(51) Int. Cl.: A01D 80/00, A01D 78/12

(54) **Fahrwerk für Kreiselheumaschinen, wie Kreiselschwader**
Running gear for rotary hay machines, as rotary swathers
Dispositif de roulement pour machines à fenaison rotatives, notamment pour râteaux andaineurs

(30) Priorität: 05.07.1991 DE 4122269; 26.03.1991 DE 4109874
(43) Veröffentlichungstag der Anmeldung: 30.09.1992
(73) Patentinhaber: CLAAS SAULGAU GMBH, D-88340 Saulgau (DE)
(72) Erfinder: Deni, Franz, W-7968 Saulgau-Bogenweiler (DE)

(56) Entgegenhaltungen:
- DE-A- 2 833 814
- DE-A- 3 808 931
- DE-A- 4 027 025
- DE-U- 8 901 611

## Beschreibung

Die Erfindung bezieht sich auf ein Fahrwerk für Kreiselheumaschinen, wie Kreiselschwader, nach dem Oberbegriff der Ansprüche 1 und 2.

Derartige Fahrwerke sind z. B. durch das DBGM 89 01 611 bekannt geworden. Um eine gute Bodenanpassung zu erreichen, ist dort beansprucht, daß drei Laufräder an einem gemeinsamen Fahrgestell-Rahmen angeordnet sind, der seinerseits um eine Querachse schwenkbar mit einem Achstrag-Rahmen verbunden ist. Gegenüber einem Fahrgestell mit starr angebrachtem Fahrgestellrahmen bringt das zwar einen Vorteil für die Bodenanpassung der Maschine, der aber nur wirksam wird, wenn quer zur Fahrtrichtung verlaufende Bodenwellen überfahren werden. Verlaufen die Bodenwellen schräg zur Fahrtrichtung, so bleibt die Wirkung auf die Bodenanpassung aber aus.

Eine bessere Bodenanpassung wird mit einem 4-rädrigen Fahrwerk nach der DE-OS 38 08 931 erreicht, allerdings mit höherem Konstruktionsaufwand.

Mit der Erfindung soll erreicht werden, daß eine verbesserte Bodenanpassung und ein ruhiger Lauf der Maschine über unebenes Gelände mit geringem Aufwand erzielt wird.

Die Aufgabe wird dadurch gelöst, daß nach Anspruch 1 eines der hinteren Laufräder an einer mit einem Teil des Maschinengestells verbundenen Achse gelagert ist, während ein anderes der hinteren Laufräder und das im vorderen Bereich des Arbeitskreisels vorgesehene Laufrad gemeinsam an einer um einen quer zur Fuhrtrichtung waagrechten schwenkzupfen schwingbar gelagerten Doppelschwinge gelagert sind, bzw. daß nach Anspruch 2 eines der etwa quer zum Mittelpunkt des Arbeitskreisels angeordneten Laufräder an einer, mit dem Maschinengestell fest verbundenen Achse gelagert ist, während das andere, etwa quer zum Mittelpunkt des Arbeitskreisels befindliche und das der Drehachse vorauslaufende Laufrad gemeinsam an einer um einen quer zur Fahrtrichtung waagrechten Schwenkzapfen schwingbar gelagerten Doppelschwinge angeordnet sind. Dadurch wird erreicht, daß jedes Laufrad einer Bodenunebenheit für sich folgen kann, ohne die anderen Laufräder zu beeinflussen und ohne den Mittelpunkt des Arbeitskreisels nennenswert anzuheben.

Vorteilhaft ist es, die Doppelschwinge auf der Seite des Arbeitskreisels anzuordnen, auf der die Rechenzinken in Bodennähe arbeiten. Dadurch wird die Bodenanpassung vor allem an der für die Rechwirkung wichtigen Seite verbessert.

Weitere für die Ausgestaltungsmöglichkeit wichtige Merkmale sind in den Ansprüchen 4 - 11 enthalten.

Die Erfindung wird anhand von 4 Abbildungen beispielsweise erläutert:

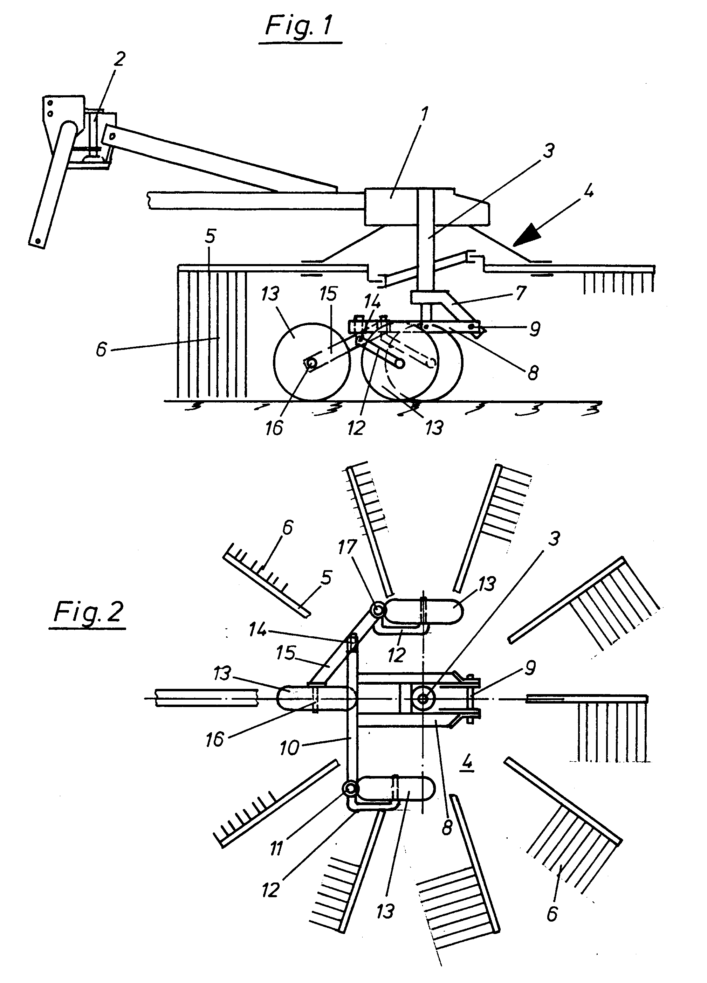

- Figur 1: zeigt einen Kreiselschwader mit einem Fahrwerk nach der Erfindung in Seitenansicht
- Figur 2: zeigt den gleichen Gegenstand in Ansicht von oben
- Figur 3: zeigt ein Fahrwerk mit anderer Laufradanordnung
- Figur 4: zeigt eine weitere Laufradanordnung.

Ein Kreiselschwader mit einem Maschinengestell (1) und einem Anbaubock (2) besitzt einen, um eine senkrechte Achse (3) umlaufenden Arbeitskreisel (4) mit Zinkenarmen (5) und Rechenzinken (6). Mit einem gestellfesten Ausleger (7) ist ein Fahrwerksträger (8) um eine querliegende Achse (9) schwenkbar verbunden. Die Schwenkbarkeit des Fahrwerksträgers (8) dient zur Höheneinstellung des Arbeitskreisels (4).

Mit dem Fahrwerksträger (8), der einen Teil des Maschinengestelles (1) bildet, ist eine quer zur Fahrtrichtung verlaufende Achse (10) fest verbunden. Die Achse (10) erstreckt sich nach der Seite des Arbeitskreisel (4), auf der die Rechenzinken (6) bei der Arbeit ausgehoben sind. An dem freien Ende der Achse (10) befindet sich ein Schwenkkopf (11), in dem der senkrechte Schenkel einer Nachlaufachse (12) drehbeweglich gelagert ist. Die Nachlaufachse (12) trägt ein Laufrad (13).

An dem gegenüberliegenden Ende besitzt die Achse (10) einen waagrechten Schwenkzapfen (14). Darauf ist eine schräg zur Fahrtrichtung verlaufende Doppelschwinge (15) gelagert. Die Doppelschwinge (15) trägt an ihrem in Fahrtrichtung vorderen Ende einen waagrechten, quer gerichteten Achszapfen (16), auf dem ein Laufrad (13) gelagert ist. Am in Fahrtrichtung hinteren Ende der Doppelschwinge (15) ist ein Schwenkkopf (17), in dem der senkrechte Schenkel einer Nachlaufachse (12) drehbeweglich gelagert ist. Die Nachlaufachse (12) trägt ebenfalls ein Laufrad (13).

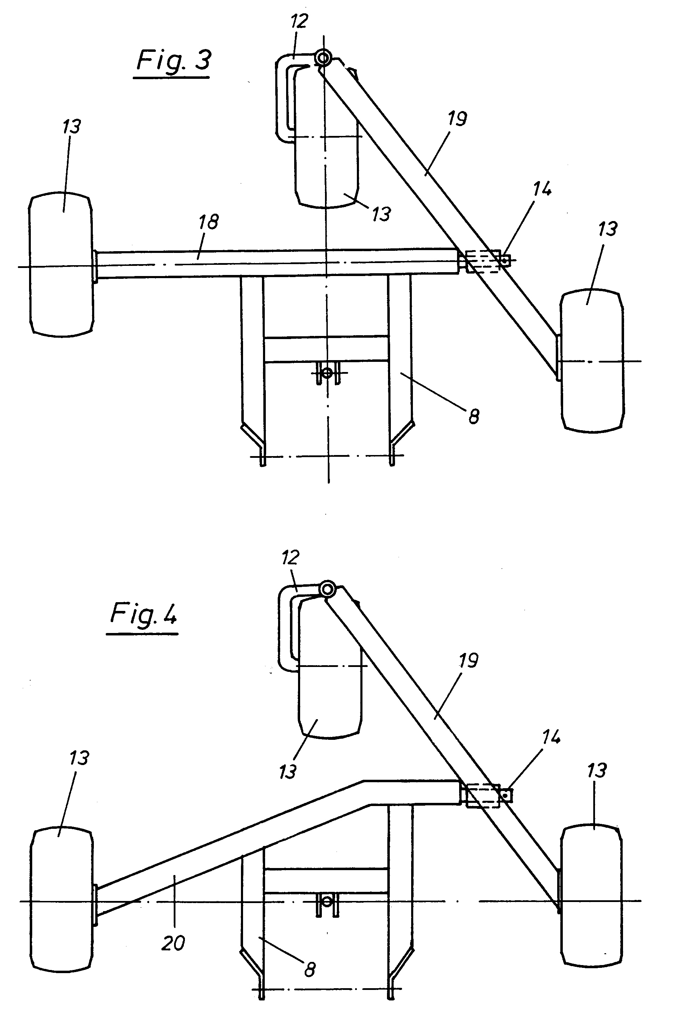

Bei einer anderen Ausbildungsform (Figur 3) ist mit einer Achse (18), die quer zur Fahrtrichtung verläuft, ein starres Laufrad (13) und eine Doppelschwinge (19) verbunden. Diese Doppelschwinge (19) trägt in Fahrtrichtung vorne ein Nachlaufrad (12, 13) und hinten ein starres Laufrad (13). Das linke Laufrad (13) und das rechte Laufrad (13) sind in Fahrtrichtung zueinander gestaffelt.

Bei einer ähnlichen Ausführungsform (Figur 4) ist eine gekröpfte Achse (20) mit dem Fahrwerksträger (8) verbunden. Bei dieser Ausführung laufen das linke und das rechte Laufrad achsgleich.

Wie die Beispiele zeigen, sind verschiedene Kombinationen von starren Laufrädern und Nachlaufrädern möglich. Wesentlich ist, daß immer zwei Laufräder an einer Doppelschwinge und eines an einer starren Achse gelagert sind.

## Patentansprüche

1. Fahrwerk für Kreiselheumaschinen, wie Kreiselschwader mit mindestens drei, unterhalb jedes Arbeitskreisels (4) angeordneten Laufräder (13), wobei eines der Laufräder im in Fahrtrichtung vorderen Bereich des Arbeitskreisels (4) und die anderen Laufräder (13) auf etwa quer zur Fahrtrichtung verlaufenden Achszapfen hinter dem im vorderen Bereich des Arbeitskreisels (4) vorgesehenen Laufrad (13) angeordnet sind, dadurch gekennzeichnet, daß eines der hinteren Laufräder (13) an einer, mit einem Teil (8) des Maschinengestelles (1) verbundenen Achse (10, 18) gelagert ist, während ein anderes der hinteren Laufräder (13) und das im vorderen Bereich des Arbeitskreisels (4) vorgesehene Laufrad (13) gemeinsam an einer um einen quer zur Fahrtrichtung waagrechten Schwenkzapfen (14) schwingbar gelagerten Doppelschwinge (15, 19) gelagert sind.

2. Fahrwerk für Kreiselheumaschinen, wie Kreiselschwader mit drei, unterhalb jedes Arbeitskreisels (4) angeordneten Laufräder (13), wobei eines der Laufräder (13) vor der Drehachse (3) des Arbeitskreisels (4) und die beiden anderen Laufräder (13) auf einer quer zur Fahrtrichtung etwa durch den Mittelpunkt des Arbeitskreisels (4) verlaufenden Achse angeordnet sind, dadurch gekennzeichnet, daß eines der etwa quer zum Mittelpunkt des Arbeitskreisels (4) angeordneten Laufräder (13) an einer, mit einem Teil (8) des Maschinengestelles (1) verbundenen Achse (20) gelagert ist, während das andere, etwa quer zum Mittelpunkt (3) des Arbeitskreisels (4) befindliche und das der Drehachse (3) vorauslaufende Laufrad (13) gemeinsam an einer um einen quer zur Fahrtrichtung waagrechten Schwenkzapfen (14) schwingbar gelagerten Doppelschwinge (15, 19) gelagert sind.

3. Fahrwerk nach den Ansprüchen 1 oder 2, dadurch gekennzeichnet, daß die Doppelschwinge (15, 19) auf der Seite des Arbeitskreisels (4) angeordnet ist, auf der die Rechenzinken (6) in Bodennähe arbeiten.

4. Fahrwerk nach den Ansprüchen 1 bis 2, dadurch gekennzeichnet, daß eines oder mehrere der Laufräder (13) als Nachlaufräder ausgebildet sind.

5. Fahrwerk nach einem der Ansprüche 1 - 4, dadurch gekennzeichnet, daß das auf der Seite des Arbeitskreisels (4), an der die Rechenzinken (6) ausgehoben sind, angeordnete Laufrad (13) als starres Rad ausgeführt ist.

6. Fahrwerk nach einem der Ansprüche 1 - 5, dadurch gekennzeichnet, daß das im vorderen Bereich des Arbeitskreisels (4) vorgesehene d. h. das vorauslaufende Laufrad (13) als starres, die übrigen Laufräder (13) aber als Nachlaufräder ausgeführt sind.

7. Fahrwerk nach einem der Ansprüche 1 - 6, dadurch gekennzeichnet, daß zumindest zwei der seitlich beabstandeten hinteren Laufräder (13) in Fahrtrichtung gestaffelt zueinander angeordnet sind.

8. Fahrwerk nach einem der Ansprüche 1 - 7, dadurch gekennzeichnet, daß mindestens eines der hinteren Laufräder (13) in Fahrtichtung hinter einer quer durch den Mittelpunkt (3) des Arbeitskreisels (4) verlaufenden Vertikalebene vorgesehen ist.

9. Fahrwerk nach den Ansprüchen 1 - 8, dadurch gekennzeichnet, daß der Pendelweg der Doppelschwinge (15, 19) durch Anschläge begrenzt ist.

10. Fahrwerk nach den Ansprüchen 1 - 9, dadurch gekennzeichnet, daß der Schwenkzapfen (14), um die die Doppelschwinge (15, 19) schwingbar gelagert ist, quer zur Fahrtrichtung verläuft.

11. Fahrwerk nach den Ansprüchen 1 - 9, dadurch gekennzeichnet, daß der Schwenkzapfen (14), um die die Doppelschwinge (15, 19) schwingbar gelagert ist, schräg zur Fahrtrichtung oder in Fahrtrichtung verläuft.

## Claims

1. A chassis for rotary hay-making machines such as rotary windrowers comprising at least three support wheels (13) arranged beneath each working rotor (4), wherein one of the support wheels is arranged in the region of the working rotor (4), which is the front region in the direction of travel, and the other support wheels (13) are arranged on axle journals extending approximately transversely to the direction of travel, behind the support wheel (13) provided in the front region of the working rotor (4), characterised in that one of the rear support wheels (13) is mounted on an axle (10, 18) connected to a portion (8) of the machine support frame (1) while another of the rear support wheels (13) and the support wheel (13) provided in the front region of the working rotor (4) are jointly mounted to a double rocker arm (15, 19) which is mounted rockably about a pivot member (14) which is horizontal transversely to the direction of travel.

2. A chassis for rotary hay-making machines such as rotary windrowers comprising three support wheels (13) arranged beneath each working rotor (4), wherein one of the support wheels (13) is arranged in front of the axis of rotation (3) of the working rotor (4) and the other two support wheels (13) are arranged on an axis which extends transversely to the direction of travel approximately through the centre point of the working rotor (4), characterised in that one of the support wheels (13) which are arranged approximately transversely to the centre point of the working rotor (4) is mounted on an axle (20) which is connected to a portion (8) of the machine support frame (1) while the other support wheel (13) which is disposed approximately transversely relative to the centre point (3) of the working rotor (4) and the support wheel (13) which leads the axis of rotation ( 3) are mounted jointly to a double rocker arm (15, 19) which is mounted rockably about a pivot member (14) which is horizontal transversely relative to the direction of travel.

3. A chassis according to claim 1 or claim 2 characterised in that the double rocker arm (15, 19) is arranged on the side of the working rotor (4), on which the rake tines (6) operate in the vicinity of the ground.

4. A chassis according to claims 1 to 2 characterised in that one or more of the support wheels (13) is in the form of trailing wheels.

5. A chassis according to one of claims 1 to 4 characterised in that the support wheel (13) arranged on the side of the working rotor (4) at which the rake tines (6) are lifted out is in the form of a rigid wheel.

6. A chassis according to one of claims 1 to 5 characterized in that the support wheel (13) which is in the front region of the working rotor (4), that is to say the leading support wheel, is in the form of a rigid support wheel but the other support wheels (13) are in the form of trailing wheels.

7. A chassis according to one of claims 1 to 6 characterised in that at least two of the laterally spaced rearward support wheels (13) are arranged in staggered relationship with each other in the direction of travel.

8. A chassis according to one of claims 1 to 7 characterised in that at least one of the rearward support wheels (13) is disposed in the direction of travel behind a vertical plane which extends transversely through the centre point (3) of the working rotor (4).

9. A chassis according to claims 1 to 8 characterised in that the swing movement of the double rocker am (15, 19) is limited by stops.

10. A chassis according to claims 1 to 9 characterised in that the pivot member (14) about which the double rocker arm (15, 19) is rockably mounted extends transversely to the direction of travel.

11. A chassis according to claims 1 to 9 characterised in that the pivot member (14) about which the double rocker member (15, 19) is rockably mounted extends inclinedly relative to the direction of travel or in the direction of travel.

## Revendications

1. Train de roulement pour machines de fenaison rotatives, telles que des andaineuses rotatives comprenant au moins trois roues de roulement (13) disposées au-dessous de chaque carrousel de travail (4), l'une des roues de roulement étant montée dans la direction de la marche dans la zone avant du carrousel de travail (4) et les autres roues de roulement (13) étant montées sur un tourillon d'axe orienté sensiblement transversalement à la direction de la marche à l'arrière de la roue de roulement (13) prévue dans la zone avant du carrousel de travail (4), caractérisé en ce que l'une des roues de roulement arrière (13) est montée sur un axe (10, 18) relié à une partie (8) du châssis (1) de la machine, alors qu'une autre des roues de roulement arrière (13) et la roue de roulement (13) prévue dans la zone avant du carrousel de travail (4) sont montées en commun sur une double bielle oscillante (15, 19) montée de façon pivotante sur un tourillon de pivotement horizontal et transversal à la direction de la marche.

2. Train de roulement pour machines de fenaison rotatives, telles que des andaineuses rotatives comprenant trois roues de roulement (13) disposées au-dessous de chaque carrousel de travail (4), l'une des roues de roulement (13) étant disposée à l'avant de l'axe de rotation (3) du carrousel de travail (4) et les deux autres roues de roulement (13) étant montées sur un axe transversal à la direction de la marche et passant sensiblement par le point central du carrousel de travail (4), caractérisé en ce que l'une des roues de roulement (13) disposées sensiblement transversalement au point central du carrousel de travail (4) est montée sur un axe relié à une partie (8) du châssis (1) de la machine, alors que l'autre roue de roulement (13) disposée sensiblement transversalement par rapport au point central (3) du carrousel de travail (4) et celle qui est disposée à l'avant de l'axe de rotation (3) sont montées en commun sur une double bielle oscillante (15, 19) montée de façon pivotante sur un tourillon de pivotement (14) horizontal et transversal à la direction de la marche.

3. Train de roulement selon la revendication 1 ou 2, caractérisé en ce que la double bielle oscillante (15, 19) est disposée sur le côté du carrousel de travail (4) où les dents de ratissage (6) travaillent à proximité du sol.

4. Train de roulement selon la revendication 1 - 2, caractérisé en ce qu'une ou plusieurs des roues de roulement (13) sont constituées sous forme de roues suiveuses.

5. Train de roulement selon l'une quelconque des revendications 1 - 4, caractérisé en ce que la roue de roulement (13) montée sur le côté du carrousel de travail (4) où les dents de ratissage (6) sont soulevées est constituée sous forme d'une roue rigide.

6. Train de roulement selon l'une quelconque des revendications 1 - 5, caractérisé en ce que la roue de roulement (13) prévue dans la zone avant du carrousel de travail (4), c'est-à-dire la roue de roulement située à l'avant, est constituée sous forme d'une roue rigide alors que les autres roues de roulement (13) sont constituées sous forme de roues de roulement suiveuses.

7. Train de roulement selon l'une quelconque des revendications 1 - 6, caractérisé en ce qu'au moins deux des roues de roulement arrière (13) qui sont écartées l'une de l'autre latéralement sont montées en étant décalées l'une par rapport à l'autre dans la direction de la marche.

8. Train de roulement selon l'une quelconque des revendications 1 - 7, caractérisé en ce que l'une au moins des roues de roulement arrière (13) est prévue dans la direction de la marche à l'arrière d'un plan vertical passant transversalement par le point central (3) du carrousel de travail (4).

9. Train de roulement selon l'une quelconque des revendications 1 - 8, caractérisé en ce que la course pendulaire de la double bielle oscillante (15, 19) est limitée par des butées.

10. Train de roulement selon l'une quelconque des revendications 1 - 9, caractérisé en ce que le tourillon de pivotement (14) autour duquel est montée de façon pivotante la double bielle oscillante (15, 19) est orienté transversalement à la direction de la marche.

11. Train de roulement selon l'une quelconque des revendications 1 - 9, caractérisé en ce que le tourillon de pivotement (14) autour duquel la double bielle oscillante (15, 19) est montée de façon pivotante est orienté en oblique par rapport à la direction de la marche, ou en direction de la marche.
